# FASCICULE DE BREVET EUROPEEN

(11) **EP 4 140 147 B1**
(45) Date de publication et mention de la délivrance du brevet: **18.10.2023**
(21) Numéro de dépôt: 21718151.0
(22) Date de dépôt: 19.04.2021
(51) Int. Cl.: H04Q 11/00

(54) **PROCÉDÉ D'ETABLISSEMENT DE COMMUNICATION DANS UN RESEAU D'ACCÈS OPTIQUE**
VERFAHREN ZUR HERSTELLUNG EINER KOMMUNIKATION IN EINEM OPTISCHEN ZUGANGSNETZWERK
METHOD FOR ESTABLISHING COMMUNICATION IN AN OPTICAL ACCESS NETWORK

(30) Priorité: 22.04.2020 FR 2003998
(43) Date de publication de la demande: 01.03.2023
(73) Titulaire: SAGEMCOM BROADBAND SAS, 92500 Rueil-Malmaison (FR)
(72) Inventeur: REUCHE, Anthony, 92500 RUEIL MALMAISON (FR)
(74) Mandataire: Cabinet Le Guen Maillet
(86) Numéro de dépôt international: PCT/EP2021/060052
(87) Numéro de publication internationale: WO 2021/213965

(56) Documents cités:
- CA-A1- 3 052 662
- JP-B2- 5 097 641
- JP-B2- 5 097 655
- US-A1- 2012 008 948
- US-B2- 8 107 824

## Description

### DOMAINE TECHNIQUE

La présente invention concerne un procédé d'établissement de communication dans un réseau optique d'accès (« optical access network » en anglais) de type réseau optique passif PON (« Passive Optical Network » en anglais), plus particulièrement entre un équipement de terminaison de ligne optique OLT (« Optical Line Terminaison » en anglais) et un équipement utilisateur appelé « unité de réseau optique » ONU (« Optical Network Unit » en anglais).

### ETAT DE LA TECHNIQUE ANTERIEURE

La distribution de données numériques par réseau optique d'accès jusque chez une pluralité d'utilisateurs, pour accéder par exemple à l'Internet, est réalisée au travers d'un support fibre optique. On parle de technologie FTTH (pour « Fiber To The Home » en anglais) ou de FTTB (« Fiber To The Building » en anglais). Ainsi, plusieurs systèmes de transport de données peuvent coexister sur une même fibre optique, permettant ainsi à un opérateur de service de distribuer plusieurs services au travers d'une infrastructure réduite. Des réseaux optiques passifs PON peuvent ainsi être créés entre un ou plusieurs équipements de terminaison de ligne optique OLT et de nombreux équipements utilisateur ONU, grâce à des dispositifs de couplage de longueurs d'ondes et des dispositifs de couplage de lignes optiques d'utilisateurs.

Les différents systèmes de transport correspondent à des matériels et protocoles normalisés, par exemple le système G-PON (« Gigabit Passive Optical Network » en anglais) qui permet d'atteindre un débit de 2.5 Gbps dans le sens descendant et un débit de 1,2 Gbps dans le sens montant, tel que décrit par la norme ITU-T G.984, ou le système XG-PON (« eXtended Gigabit Passive Optical Network » en anglais) qui permet d'atteindre un débit de 10 Gbps dans le sens descendant et un débit de 2.5Gbps dans le sens montant, tel que décrit par la norme ITU-T G.988, ou encore le système XGS-PON (« 10 Gigabit-capable Symmetric Passive Optical Network » en anglais) qui permet d'atteindre un débit de 10 Gbps aussi bien dans le sens montant que descendant, tel que décrit par la norme ITU-T G.9807.1.

Lorsque différents systèmes de transport coexistent sur une même fibre optique, chacun de ces systèmes de transport établissent des communications par signaux lumineux utilisant des longueurs d'ondes porteuses (λ) distinctes ou des peignes de longueurs d'ondes porteuses, que ce soit dans le sens montant ou dans le sens descendant et/ou utilisant des mécanismes de répartition temporelle d'accès TDMA (« Time Division Multiple Access » en anglais) à la fibre optique.

La coexistence des différents systèmes de transport sur une même fibre optique permet à un équipement utilisateur ONU d'être configuré pour utiliser, selon un profil utilisateur établi auprès de l'équipement de terminaison OLT pour l'équipement utilisateur ONU en question, un unique système de transport parmi ceux distribués via cette fibre optique.

Actuellement, dans le cas où un équipement utilisateur ONU doit être connecté à une fibre optique sur laquelle plusieurs systèmes de transport coexistent, une intervention humaine, par un technicien installateur par exemple, est nécessaire afin de configurer correctement l'équipement utilisateur ONU pour utiliser le système de transport qui correspond au profil utilisateur enregistré du côté de l'équipement de terminaison OLT. Cette intervention humaine est également nécessaire si un changement de profil utilisateur intervient du côté de l'équipement de terminaison OLT, par exemple pour passer d'un service fibre optique à 500 Mbps utilisant le protocole G-PON vers un service fibre optique à 10 Gbps utilisant le protocole XGS-PON. Or, une telle intervention humaine est sujette à erreurs de configuration, ce qui entraîne notamment des accroissements de besoins en assistance téléphonique (« hotline » en anglais).

Il est alors souhaitable de pallier ces inconvénients de l'état de la technique.

Il est notamment souhaitable de fournir une solution qui permette de réduire les interventions humaines pour permettre à un équipement utilisateur ONU, capable de communiquer par le biais de plusieurs systèmes de transport coexistant sur une même fibre optique, d'être configuré pour communiquer via un système de transport particulier, parmi plusieurs systèmes de transport possibles.

Il est notamment souhaitable d'accélérer la mise en communication d'un tel équipement utilisateur ONU.

Il est notamment souhaitable de fournir une solution qui permette de réduire les interventions humaines lors d'un changement de profil utilisateur.

Le document de brevet JP 5 097641 B2 décrit un procédé de mise en communication d'un équipement utilisateur de type ONU (320) avec un équipement de terminaison de ligne de type OLT (200) dans un réseau optique d'accès proposant divers systèmes de transport, l'équipement utilisateur supportant au moins deux systèmes de transport (1G, 10G), chaque système de transport étant un ensemble de communication comportant un protocole dédié, le procédé comportant les étapes suivantes : - l'équipement utilisateur se configure pour communiquer par le biais d'un premier système de transport (1G) parmi les systèmes de transport supportés par l'équipement utilisateur; - l'équipement utilisateur démarre une synchronisation avec l'équipement de terminaison de ligne pour le premier système de transport; - l'équipement de terminaison de ligne transmet via une couche protocolaire chapeautant tout système de transport du réseau optique d'accès, un premier message indiquant quel système de transport est à utiliser par l'équipement utilisateur; - lorsque le système de transport à utiliser par l'équipement utilisateur est un deuxième système de transport (10G) différent du premier système de transport, l'équipement utilisateur se configure pour communiquer par le biais du second système de transport et effectue la synchronisation pour le second système de transport jusqu'à mise en communication dans le réseau optique d'accès.

### EXPOSE DE L'INVENTION

Il est proposé un procédé de mise en communication d'un équipement utilisateur de type ONU avec un équipement de terminaison de ligne de type OLT dans un réseau optique d'accès proposant divers systèmes de transport, l'équipement utilisateur supportant au moins deux systèmes de transport, chaque système de transport étant un ensemble de communication comportant un protocole dédié, le procédé comportant les étapes suivantes :
- l'équipement utilisateur se configure pour communiquer par le biais d'un premier système de transport parmi les systèmes de transport supportés par l'équipement utilisateur ;
- l'équipement utilisateur démarre une synchronisation avec l'équipement de terminaison de ligne pour le premier système de transport ;
- l'équipement de terminaison de ligne transmet via une couche protocolaire chapeautant tout système de transport du réseau optique d'accès, sans attendre que la synchronisation avec l'équipement utilisateur pour le premier système de transport soit terminée, un premier message indiquant quel système de transport est à utiliser par l'équipement utilisateur ;
- lorsque le système de transport à utiliser par l'équipement utilisateur est le premier système de transport, l'équipement utilisateur poursuit la synchronisation pour le premier système de transport jusqu'à mise en communication dans le réseau optique d'accès ;
- lorsque le système de transport à utiliser par l'équipement utilisateur est un deuxième système de transport différent du premier système de transport, l'équipement utilisateur se configure pour communiquer par le biais du second système de transport et effectue la synchronisation pour le second système de transport jusqu'à mise en communication dans le réseau optique d'accès.

Ainsi, la configuration de l'équipement utilisateur de type ONU est automatique, sans intervention humaine. De plus, lorsque l'équipement utilisateur de type ONU doit changer de système de transport, la fin de la synchronisation avec le système de transport initialement sélectionné n'est pas attendue, ce qui accélère la mise en communication de l'équipement utilisateur de type ONU dans le réseau optique d'accès.

Selon un mode de réalisation particulier, l'équipement utilisateur transmet grâce au premier système de transport à l'équipement de terminaison de ligne un identifiant de l'équipement utilisateur et l'équipement de terminaison de ligne obtient, dans une base de données, un profil utilisateur associé à l'identifiant de l'équipement utilisateur, le profil utilisateur incluant l'information de système de transport à utiliser par l'équipement utilisateur. Ainsi, la mise en communication de l'équipement utilisateur dans le réseau optique d'accès est conforme à un profil utilisateur provisionné.

Selon un mode de réalisation particulier, lorsqu'aucun profil utilisateur n'est associé avec l'identifiant de l'équipement utilisateur, le premier message contient un message d'erreur. Ainsi, l'équipement utilisateur de type ONU n'a pas à s'évertuer à tenter de se synchroniser dans le réseau optique d'accès.

Selon un mode de réalisation particulier, la couche protocolaire chapeautant tout système de transport du réseau optique d'accès est OMCI (« ONU Management and Control Interface » en anglais) et le premier message inclut un objet de configuration de type « Managed Entity » indiquant le système de transport à utiliser par l'équipement utilisateur. Ainsi, le procédé est aisément mis en oeuvre dans des réseaux optiques d'accès communs sur le marché.

Selon un mode de réalisation particulier, lorsqu'un changement de système de transport à utiliser par l'équipement utilisateur survient et qu'en outre l'équipement utilisateur est déjà mis en communication dans le réseau optique d'accès, l'équipement de terminaison de ligne transmet, via la couche protocolaire chapeautant tout système de transport du réseau optique d'accès, un second message indiquant quel système de transport est à utiliser désormais par l'équipement utilisateur, et l'équipement utilisateur se configure pour communiquer par le biais du système de transport à utiliser désormais et effectue la synchronisation pour le système de transport à utiliser désormais jusqu'à mise en communication dans le réseau optique d'accès. Ainsi, la configuration de l'équipement utilisateur de type ONU est automatique, sans intervention humaine même lorsque le profil utilisateur change en cours de route.

Selon un mode de réalisation particulier, l'équipement utilisateur obtient une information représentative du premier système de transport à partir d'un paramètre stocké en mémoire non volatile de l'équipement utilisateur, et sur réception de tout message en provenance de l'équipement de terminaison de ligne indiquant le système de transport à utiliser par l'équipement utilisateur, l'équipement utilisateur met à jour ledit paramètre avec une information représentative du système de transport à utiliser par l'équipement utilisateur tel qu'indiqué dans ledit message. Ainsi, lors d'un prochain redémarrage ou d'une perte de synchronisation de l'équipement utilisateur de type ONU, la mise en communication est plus rapide.

Selon un mode de réalisation particulier, lorsque l'équipement utilisateur ne détecte pas de signaux, en s'étant configuré pour le premier système de transport, pendant une fenêtre temporelle de durée prédéfinie, l'équipement utilisateur teste alors un autre système de transport parmi ceux supportés par l'équipement utilisateur. Ainsi, l'équipement utilisateur de type ONU peut être mis à terme en communication dans le réseau optique d'accès, même lorsqu'un système de transport supporté par l'équipement utilisateur de type ONU n'est pas ou plus supporté par l'équipement de terminaison de ligne de type OLT.

Il est aussi proposé un procédé de mise en communication d'un équipement utilisateur de type ONU avec un équipement de terminaison de ligne de type OLT dans un réseau optique d'accès, le procédé étant réalisé par l'équipement utilisateur, l'équipement utilisateur supportant au moins trois systèmes de transport, chaque système de transport étant un ensemble de communication comportant un protocole dédié, le procédé comportant les étapes suivantes :
- configurer l'équipement utilisateur pour communiquer par le biais d'un premier système de transport parmi les systèmes de transport supportés par l'équipement utilisateur ;
- démarrer une synchronisation avec l'équipement de terminaison de ligne pour le premier système de transport ;
- recevoir via une couche protocolaire chapeautant l'ensemble des systèmes de transport supportés par l'équipement utilisateur, sans attendre que la synchronisation avec l'équipement de terminaison de ligne pour le premier système de transport soit terminée, un message indiquant quel système de transport est à utiliser par l'équipement utilisateur ;
- lorsque le système de transport à utiliser par l'équipement utilisateur est le premier système de transport, poursuivre la synchronisation pour le premier système de transport jusqu'à mise en communication dans le réseau optique d'accès ;
- lorsque le système de transport à utiliser par l'équipement utilisateur est un deuxième système de transport différent du premier système de transport, configurer l'équipement utilisateur pour communiquer par le biais du second système de transport et effectuer la synchronisation pour le second système de transport jusqu'à mise en communication dans le réseau optique d'accès.

Il est aussi proposé un procédé de mise en communication d'un équipement utilisateur de type ONU avec un équipement de terminaison de ligne de type OLT dans un réseau optique d'accès, le procédé étant réalisé par l'équipement de terminaison de ligne, l'équipement de terminaison de ligne supportant divers systèmes de transport, chaque système de transport étant un ensemble de communication comportant un protocole dédié, le procédé comportant les étapes suivantes :
- démarrer une synchronisation avec l'équipement utilisateur, à l'initiative de ce dernier, pour un premier système de transport ;
- transmettre via une couche protocolaire chapeautant les systèmes de transport supportés par l'équipement de terminaison de ligne, sans attendre que la synchronisation avec l'équipement utilisateur pour le premier système de transport soit terminée, un message indiquant quel système de transport est à utiliser par l'équipement utilisateur ;
- lorsque le système de transport à utiliser par l'équipement utilisateur est différent du premier système de transport, démarrer une synchronisation avec l'équipement utilisateur, à l'initiative de ce dernier, pour ledit système de transport à utiliser par l'équipement utilisateur.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé réalisé par l'équipement utilisateur, tel que mentionné ci-dessus, ou le procédé réalisé par l'équipement de terminaison de ligne, tel que mentionné ci-dessus, lorsque ledit programme est exécuté par le processeur. L'invention concerne également un support de stockage d'informations stockant un tel programme d'ordinateur.

Il est également proposé un équipement utilisateur de type ONU destiné à être mis en communication avec un équipement de terminaison de ligne de type OLT dans un réseau optique d'accès, l'équipement utilisateur supportant au moins deux systèmes de transport, chaque système de transport étant un ensemble de communication comportant un protocole dédié, l'équipement utilisateur comportant :
- des moyens pour configurer l'équipement utilisateur pour communiquer par le biais d'un premier système de transport parmi les systèmes de transport supportés par l'équipement utilisateur ;
- des moyens pour démarrer une synchronisation avec l'équipement de terminaison de ligne pour le premier système de transport ;
- des moyens pour recevoir via une couche protocolaire chapeautant l' ensemble des systèmes de transport supportés par l'équipement utilisateur, sans attendre que la synchronisation avec l'équipement de terminaison de ligne pour le premier système de transport soit terminée, un message indiquant quel système de transport est à utiliser par l'équipement utilisateur ;
- lorsque le système de transport à utiliser par l'équipement utilisateur est le premier système de transport, des moyens pour poursuivre la synchronisation pour le premier système de transport jusqu'à mise en communication dans le réseau optique d'accès ;
- lorsque le système de transport à utiliser par l'équipement utilisateur est un deuxième système de transport différent du premier système de transport, des moyens pour configurer l'équipement utilisateur pour communiquer par le biais du second système de transport et effectuer la synchronisation pour le second système de transport jusqu'à mise en communication dans le réseau optique d'accès.

Il est également proposé un équipement de terminaison de ligne de type OLT destiné à être mis en communication avec un équipement utilisateur de type ONU dans un réseau optique d'accès, l'équipement de terminaison de ligne supportant divers systèmes de transport, chaque système de transport étant un ensemble de communication comportant un protocole dédié, l'équipement de terminaison de ligne comportant :
- des moyens pour démarrer une synchronisation avec l'équipement utilisateur, à l'initiative de ce dernier, pour un premier système de transport ;
- des moyens pour transmettre via une couche protocolaire chapeautant les systèmes de transport supportés par l'équipement de terminaison de ligne, sans attendre que la synchronisation avec l'équipement utilisateur pour le premier système de transport soit terminée, un message indiquant quel système de transport est à utiliser par l'équipement utilisateur ;
- lorsque le système de transport à utiliser par l'équipement utilisateur est différent du premier système de transport, des moyens pour démarrer une synchronisation avec l'équipement utilisateur, à l'initiative de ce dernier, pour ledit système de transport à utiliser par l'équipement utilisateur.

Il est aussi proposé un réseau optique d'accès comportant un équipement de terminaison de ligne de type OLT tel qu'évoqué ci-dessus et au moins un équipement utilisateur de type ONU tel qu'évoqué ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un premier agencement de réseau optique d'accès, dans lequel la présente invention peut être implémentée ;
[Fig. 1B] illustre schématiquement un second agencement de réseau optique d'accès, dans lequel la présente invention peut être implémentée ;
[Fig. 2] illustre schématiquement un mode de réalisation d'équipement utilisateur du réseau optique d'accès ;
[Fig. 3] illustre schématiquement un exemple d'agencement matériel d'une unité de contrôle du mode de réalisation de la Fig. 2 ;
[Fig. 4] illustre schématiquement un agencement protocolaire implémenté par l'unité de contrôle ;
[Fig. 5] illustre schématiquement des échanges dans le cadre d'une mise en association d'un identifiant d'un équipement utilisateur du réseau optique d'accès avec un profil utilisateur ;
[Fig. 6] illustre schématiquement des échanges dans le cadre d'une mise en communication de l'équipement utilisateur avec un équipement de terminaison du réseau optique d'accès en accord avec le profil utilisateur ; et
[Fig. 7] illustre schématiquement des échanges dans le cadre d'une mise en communication de l'équipement utilisateur avec l'équipement de terminaison du réseau optique d'accès, en cas de changement de profil utilisateur.

### EXPOSE DETAILLE DE MODES DE REALISATION

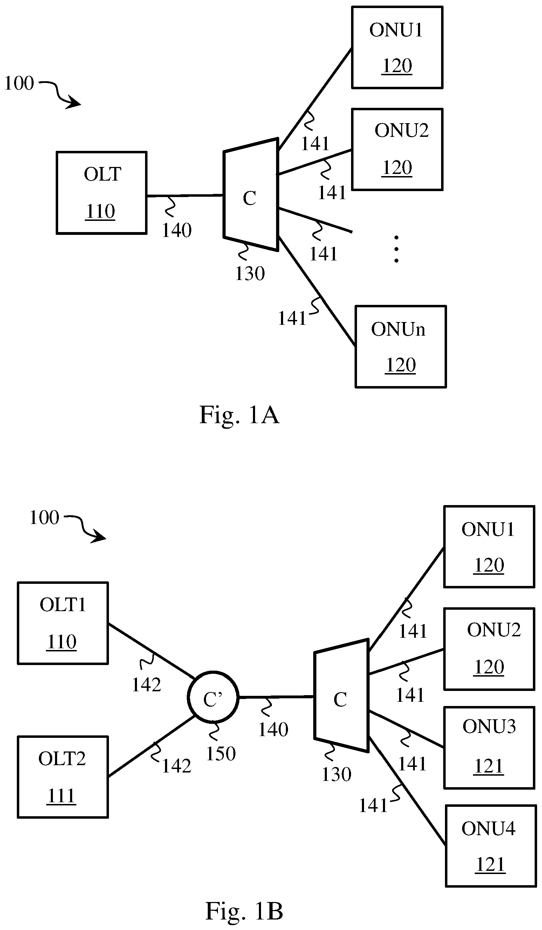

La **Fig. 1A** illustre schématiquement un premier agencement de réseau optique d'accès 100, de type PON, dans lequel la présente invention peut être implémentée. Le réseau optique d'accès 100 comporte un équipement de terminaison de ligne optique OLT 110 (simplement appelé par la suite *équipement OLT*) et une pluralité d'équipements utilisateur appelés « unités de réseau optique » ONU 120 (libellés ONU1, ONU2, ..., ONUn sur la Fig. 1A et simplement appelés par la suite *équipement ONU*)*.* Chaque équipement ONU 120 est capable de communiquer avec l'équipement OLT 110 par le biais de plusieurs systèmes de transport coexistant sur une même fibre optique 140. On appelle *système de transport* un ensemble de communication comportant un protocole dédié. Chaque système de transport est potentiellement défini en outre par une ou plusieurs longueurs d'ondes porteuses dédiées dans le sens montant (i.e., depuis un équipement ONU 120 vers l'équipement OLT 110) et dans le sens descendant (i.e., depuis l'équipement OLT 110 vers les équipements ONU 120). Typiquement, les systèmes de transport ont des performances différentes, telles que des débits différents, et sont donc adaptés à offrir des services différents.

Au moins deux systèmes de transport coexistent sur la fibre optique 140. Dans un mode de réalisation particulier, au moins trois systèmes de transport coexistent sur la fibre optique 140. Selon un mode de réalisation particulier, les systèmes de transport sont, au moins, un système de transport de type G-PON, un système de transport de type XG-PON et par exemple un système de transport de type XGS-PON.

Selon d'autres modes de réalisation, au moins un des systèmes de transport est de type NG-PON2 (« Next-Generation Passive Optical Network 2 » en anglais, tel que défini dans la norme ITU-T G.989), ou de type XG-PON2 (XG-PON à débits symétriques), ou de type EPON (« Ethernet Passive Optical Network » en anglais).

Dans un autre mode de réalisation, au moins un des systèmes de transport est compatible avec une technologie de transport optique de type 100G susceptible d'atteindre 100 Gbit/s.

Dans un mode de réalisation particulier, les équipements ONU 120 sont intégrés à des passerelles résidentielles.

Pour permettre de connecter la pluralité d'équipements ONU 120 à la fibre optique 140, le réseau optique d'accès 100 comporte un dispositif de couplage C 130 adapté pour coupler autant de lignes optiques d'utilisateurs 141 que d'équipements ONU 120.

La **Fig. 1B** illustre schématiquement un second agencement de réseau optique d'accès 100, dans lequel la présente invention peut être implémentée. Comparativement au premier agencement de la Fig. 1A, le second agencement de la Fig. 1B comporte un dispositif de couplage de longueurs d'ondes C' 150 permettant de coupler deux autres lignes optiques 142 à la fibre optique 140. Ces autres lignes optiques 142 permettent à au moins un autre équipement OLT (libellé OLT2 111 sur la Fig. 1B) de coexister avec l'équipement OLT 110 (libellé OLT1 110 sur la Fig. 1B) dans le réseau optique d'accès 100. Ainsi, sur la même fibre optique 140, les équipements ONU 120 (libellés ONU1 et ONU2 sur la Fig. 1B) peuvent communiquer avec l'équipement OLT1 110 et des équipements ONU 121 (libellés ONU3 et ONU4 sur la Fig. 1B) peuvent communiquer avec l'équipement OLT2 111.

Les dispositifs de couplage C 130 et C' 150 sont par exemple des commutateurs de longueurs d'ondes sélectifs WSS (« Wavelength Sélective Switch » en anglais) adaptés pour multiplexer des longueurs d'ondes dans une direction et démultiplexer des longueurs d'ondes dans la direction opposée.

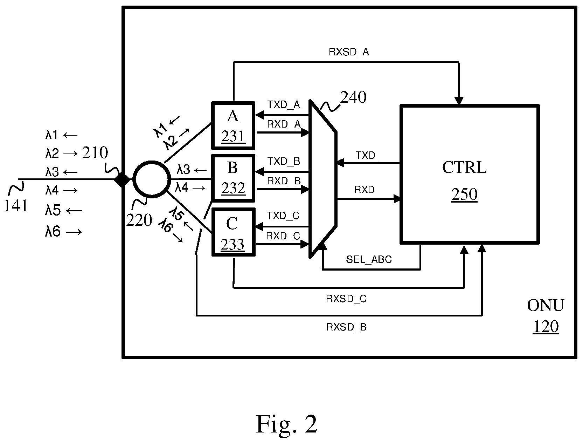

La **Fig. 2** illustre schématiquement un agencement d'équipement ONU 120.

L'équipement ONU 120 comporte un raccord optique 210 sur lequel est connectée la fibre optique, par exemple la ligne optique d'utilisateur 141, permettant de relier l'équipement ONU 120 au reste du réseau optique d'accès 100.

L'équipement ONU 120 comporte en outre un multiplexeur/démultiplexeur de longueurs d'ondes 220 permettant de combiner, respectivement séparer, les signaux optiques portés par la fibre optique 141 enfichée dans le raccord optique 210.

De manière illustrative, sur la Fig. 2, l'équipement ONU 120 comporte trois branches (A, B et C). Chaque branche supporte une direction de transmission (TX) et une direction de réception (RX), chacune ayant une longueur d'onde porteuse propre (λ1, λ3 et λ5 en transmission, et λ2, λ4 et λ6 en réception) ou un peigne de longueurs d'ondes porteuses propres.

A noter qu'une même branche peut supporter plusieurs protocoles et donc plusieurs systèmes de transport. Lorsque plusieurs systèmes de transport utilisent les mêmes longueurs d'ondes porteuses dans le réseau optique d'accès, l'utilisation de ces longueurs d'ondes porteuses est partagée dans le temps entre les systèmes de transport selon un principe de répartition temporelle d'accès TDMA.

Ainsi, à noter aussi que la Fig. 2 représente trois branches de manière illustrative et que l'équipement ONU 120 peut donc comporter un nombre différent de branches.

Des interfaces optique-électrique 231, 232, 233 comportant chacune une diode laser (pour la transmission TX) et une photodiode (pour la réception RX) permettent de convertir des signaux optiques en signaux électriques et vice versa.

L'équipement ONU 120 comporte une unité de contrôle CTRL 250.

Lorsque l'équipement ONU 120 comporte une pluralité de branches, l'équipement ONU 120 comporte en outre un commutateur de signaux électriques 240. La branche à utiliser est sélectionnée par l'unité de contrôle CTRL 250 grâce à une ligne de sélection SEL_ABC.

Ainsi, lorsque la branche A est sélectionnée par l'unité de contrôle CTRL 250 et que des signaux optiques sont détectés en réception sur la branche A, l'interface optique-électrique 231 en informe l'unité de contrôle CTRL 250 grâce à un signal RXSD_A. Le commutateur de signaux électriques 240 est alors configuré pour router des signaux présents sur une ligne de signaux RXD_A en provenance de l'interface optique-électrique 231 vers une ligne de signaux RXD en entrée de l'unité de contrôle CTRL 250. De plus, lorsque des signaux optiques sont à transmettre par le biais de la branche A, le commutateur de signaux électriques 240 est configuré pour router des signaux présents sur une ligne de signaux TXD en provenance de l'unité de contrôle CTRL 250 vers une ligne de signaux TXD_A en entrée de l'interface optique-électrique 231.

De manière similaire, lorsque la branche B est sélectionnée par l'unité de contrôle CTRL 250 et que des signaux optiques sont détectés en réception sur la branche B, l'interface optique-électrique 232 en informe l'unité de contrôle CTRL 250 grâce à un signal RXSD_B. Le commutateur de signaux électriques 240 est alors configuré pour router des signaux présents sur une ligne de signaux RXD_B en provenance de l'interface optique-électrique 232 vers la ligne de signaux RXD. De plus, lorsque des signaux optiques sont à transmettre par le biais de la branche B, le commutateur de signaux électriques 240 est configuré pour router des signaux présents sur la ligne de signaux TXD vers une ligne de signaux TXD_B en entrée de l'interface optique-électrique 232.

Enfin, lorsque la branche C est sélectionnée par l'unité de contrôle CTRL 250 et que des signaux optiques sont détectés en réception sur la branche C, l'interface optique-électrique 233 en informe l'unité de contrôle CTRL 250 grâce à un signal RXSD_C. Le commutateur de signaux électriques 240 est alors configuré pour router des signaux présents sur une ligne de signaux RXD_C en provenance de l'interface optique-électrique 233 vers la ligne de signaux RXD. De plus, lorsque des signaux optiques sont à transmettre par le biais de la branche C, le commutateur de signaux électriques 240 est configuré pour router des signaux présents sur la ligne de signaux TXD vers une ligne de signaux TXD_C en entrée de l'interface optique-électrique 233.

Un agencement d'équipement OLT 110 est aisément dérivable de l'agencement de la Fig. 2. Dans le cas de transmissions par accès TDMA, l'unité de contrôle CTRL 250 cadence, grâce à la ligne de sélection SEL_ABC, la sélection de la branche A, B ou C (lorsque l'équipement OLT 110 comporte trois branches) applicable pour chaque intervalle de temps (« time slot » en anglais) défini dans le partage temporel de l'accès à la fibre optique. Lorsque les différents systèmes de transport peuvent être utilisés simultanément dans le temps, les lignes de signaux TXD_A, TXD_B, TX_C, RXD_A, RXD_B et RXD_C sont directement connectées à l'unité de contrôle CTRL 250 qui, en l'absence de commutateur de signaux électriques 240, est configurée pour les gérer en parallèle.

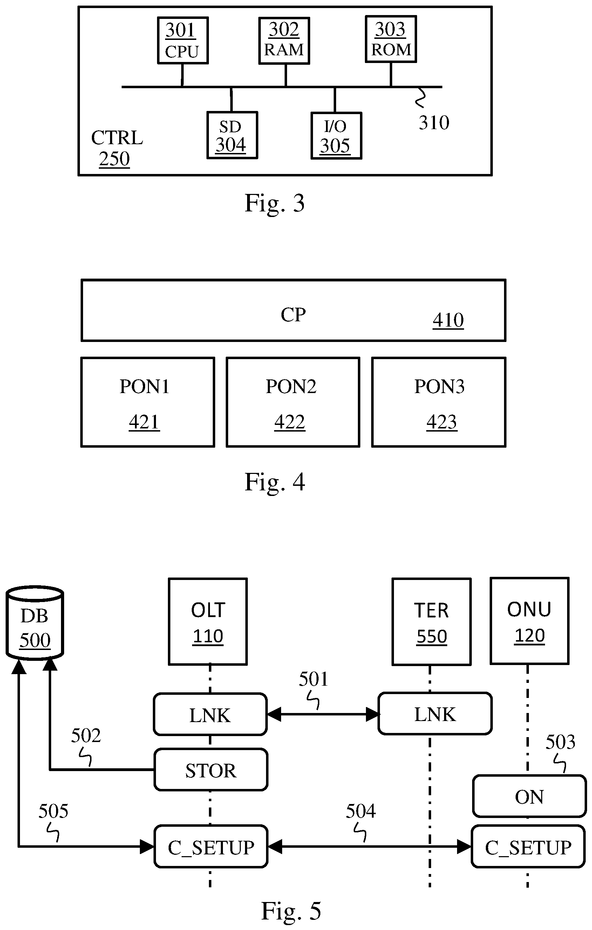

La **Fig. 3** illustre schématiquement un exemple d'agencement matériel de l'unité de contrôle CTRL 250. L'exemple d'agencement matériel présenté comporte, reliés par un bus de communication 310 : un processeur CPU 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage, tel qu'un lecteur de cartes SD (« Secure Digital » en anglais) 304 ou un disque dur HDD (« Hard Disk Drive » en anglais) ; et au moins un ensemble d'entrées-sorties I/O 305 permettant notamment de connecter les lignes de signaux TXD et RXD.

Le processeur CPU 301 est capable d'exécuter des instructions chargées dans la mémoire RAM 302 à partir de la mémoire ROM 303, d'une mémoire externe (telle qu'une carte SD), d'un support de stockage (tel que le disque dur HDD), ou d'un réseau de communication (autre que le réseau optique d'accès 100). Lors de la mise sous tension de l'unité de contrôle CTRL 250, le processeur CPU 301 est capable de lire de la mémoire RAM 302 des instructions et de les exécuter. Ces instructions forment un programme d'ordinateur causant la mise en oeuvre, par le processeur CPU 301, de tout ou partie des comportements, algorithmes et étapes décrits ici.

Ainsi, tout ou partie des comportements, algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des comportements, algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, l'unité de contrôle CTRL 250 comporte de la circuiterie électronique adaptée et configurée pour implémenter les comportements, algorithmes et étapes décrits ici.

La **Fig. 4** illustre schématiquement un agencement protocolaire implémenté par l'unité de contrôle CTRL 250.

L'agencement protocolaire de la Fig. 4 comporte une première pile protocolaire PON1 421 dédiée à un premier système de transport du réseau optique d'accès 100, une seconde pile protocolaire PON2 422 dédiée à un second système de transport du réseau optique d'accès 100, et une troisième pile protocolaire PON3 423 dédiée à un troisième système de transport du réseau optique d'accès 100. L'agencement peut ainsi comporter une ou plusieurs autres piles protocolaires dédiées à un ou plusieurs autres systèmes de transport respectifs du réseau optique d'accès 100, en parallèle des piles protocolaires PON1 421, PON2 422 et PON3 423.

Ces piles protocolaires sont chapeautées par une couche protocolaire commune CP 410. Ainsi, la couche protocolaire commune CP 410 peut communiquer dans le réseau optique d'accès 100 par l'une quelconque des piles protocolaires chapeautées.

Selon un mode de réalisation particulier, la couche protocolaire commune CP 410 est de type OMCI (« ONU Management and Control Interface » en anglais), telle que décrite par la norme ITU-T G.988. La couche protocolaire OMCI définit un mécanisme et des formats de messages utilisables par un équipement OLT pour configurer, gérer et surveiller des équipements ONU qui lui sont connectés. Les messages de la couche protocolaire OMCI sont transportés au travers d'un canal nommé OMCC (« ONU Management and Control Channel » en anglais) et sont encapsulés dans des trames GEM (« GPON Encapsulation Method » en anglais). S'appuyer sur la couche protocolaire OMCI permet de bénéficier d'un mécanisme de gestion des équipements ONU qui soit déjà largement répandu sur le marché des réseaux optiques d'accès, et qui est par conséquence compatible avec les équipements réseau de multiples fabricants. De plus, la couche protocolaire OMCI permet d'ajouter des messages supplémentaires, permettant ainsi de faire aisément évoluer les réseaux optiques d'accès avec de nouvelles fonctionnalités. Une couche protocolaire propriétaire peut toutefois être en variante utilisée pour réaliser la couche protocolaire commune CP 410.

La **Fig. 5** illustre schématiquement des échanges dans le cadre d'une mise en association d'un identifiant d'un équipement utilisateur ONU 120, tel qu'un numéro de série, avec un profil utilisateur.

Lorsqu'un utilisateur effectue une souscription de service (par exemple, mais non exclusivement, un abonnement d'accès à l'Internet), l'utilisateur choisit un service particulier correspondant à ses besoins et dont les caractéristiques techniques sont connues et définies (débit, système de transport sur fibre optique, volume de données, autres services accessibles...). Des profils utilisateur décrivant quels services sont accessibles aux utilisateurs auxquels ils sont respectivement associés décrivent ces caractéristiques techniques et sont stockés dans une base de données DB (« database » en anglais) 500 accessible depuis l'équipement OLT 110. Au cours du temps, les services à rendre accessibles à un utilisateur via son équipement ONU 120 peuvent évoluer, et ainsi, le profil utilisateur associé à cet utilisateur peut évoluer en conséquence. Cependant, à tout instant, un profil utilisateur n'autorise qu'un seul système de transport à l'équipement ONU 120 auquel ledit profil utilisateur est applicable. Par exemple, un opérateur de service peut au cours du temps faire évoluer son infrastructure de réseau optique d'accès 100, et ajouter des systèmes de transport que l'équipement ONU 120 saurait nativement utiliser mais qui n'étaient jusqu'alors pas mis à sa disposition via le réseau optique d'accès 100. L'opérateur de service peut aussi au cours du temps faire évoluer son infrastructure de réseau optique d'accès 100 en supprimant un ou plusieurs systèmes de transport présents jusqu'alors.

L'équipement OLT 110 doit être en mesure de faire le lien entre l'équipement ONU 120 installé chez un utilisateur et le profil utilisateur applicable à cet utilisateur. Il est possible de provisionner par avance la base de données DB 500, en associant un identifiant de l'équipement ONU 120 en question avec le profil utilisateur applicable. Cela nécessite toutefois d'effectuer cette association avant de fournir l'équipement ONU 120 à l'utilisateur, ce qui empêche d'approvisionner par avances des points de distribution des équipements ONU, et ce qui peut nécessiter des procédures lourdes et complexes pour l'opérateur de service. La Fig. 5 propose une approche alternative qui permet de simplifier cette phase, en provisionnant la base de données DB 500 après avoir fourni l'équipement ONU 120 à l'utilisateur.

Lors de l'installation de l'équipement ONU 120 chez l'utilisateur, l'utilisateur ou un installateur utilise un terminal TER 550 pour déclarer le lien entre l'équipement ONU 120 et le profil utilisateur. Le terminal TER 550 est par exemple un ordinateur, un téléphone portable, un téléphone intelligent (« smartphone » en anglais) ou une tablette. Le terminal TER 550 comporte une application ou un navigateur (« browser » en anglais) permettant de se connecter à un serveur, par exemple embarqué par l'équipement OLT 110, afin de fournir des informations à associer avec un profil utilisateur stocké dans la base de données DB 500. Le serveur peut par exemple exporter un portail web pour permettre à l'utilisateur ou à l'installateur d'effectuer des saisies d'informations. Dans une variante, le terminal TER 550 déclare au serveur le lien entre l'équipement ONU 120 et le profil utilisateur par un message texte de type SMS (« Short Messaging System » en anglais).

Considérons à titre illustratif que le serveur en question est embarqué par l'équipement OLT 110.

Ainsi, dans une étape 501, le terminal TER 550 interagit avec l'équipement OLT 110 pour fournir une information d'association entre un identifiant de l'équipement ONU 120 en cours d'installation chez l'utilisateur et une information représentative du profil utilisateur (opération libellée LNK sur la Fig. 5). Par exemple, l'identifiant de l'équipement ONU 120 est un numéro de série inscrit sur un boîtier de l'équipement ONU 120 ou un carton d'emballage de l'équipement ONU 120, que l'utilisateur ou l'installateur saisit via le terminal TER 550. Selon un autre exemple, l'identifiant de l'équipement ONU 120, tel que son numéro de série, est présenté sur le boîtier de l'équipement ONU 120 ou son carton d'emballage par le biais d'un code à barres, éventuellement à deux dimensions (appelé *QR code*)*,* et le terminal TER 550 est muni d'un lecteur optique adapté pour scanner de tels codes à barres. Selon encore un autre exemple, l'identifiant de l'équipement ONU 120, tel que son numéro de série, est présenté par l'équipement ONU 120 via un web serveur embarqué par l'équipement ONU 120 et accessible via une interface de réseau local LAN (« Local Area Network » en anglais) de l'équipement ONU 120. L'information représentative du profil utilisateur peut être un numéro de client ou un numéro de contrat de service.

Dans une étape 502, l'équipement OLT 110 stocke dans la base de données DB 500 le lien entre le profil utilisateur et l'équipement ONU 120 fourni à l'utilisateur correspondant (opération libellée STOR sur la Fig. 5). Ainsi, lorsque l'équipement ONU 120 en question cherche ultérieurement à être mis en communication dans le réseau optique d'accès 100 et ainsi à accéder aux, l'équipement OLT 110 est en mesure de déterminer quels services et caractéristiques techniques correspondent au profil utilisateur applicable.

Dans une étape 503, l'équipement ONU 120 est allumé (opération libellée ON sur la Fig. 5) et est raccordé à la ligne optique d'utilisateur 141 destinée à l'utilisateur en question.

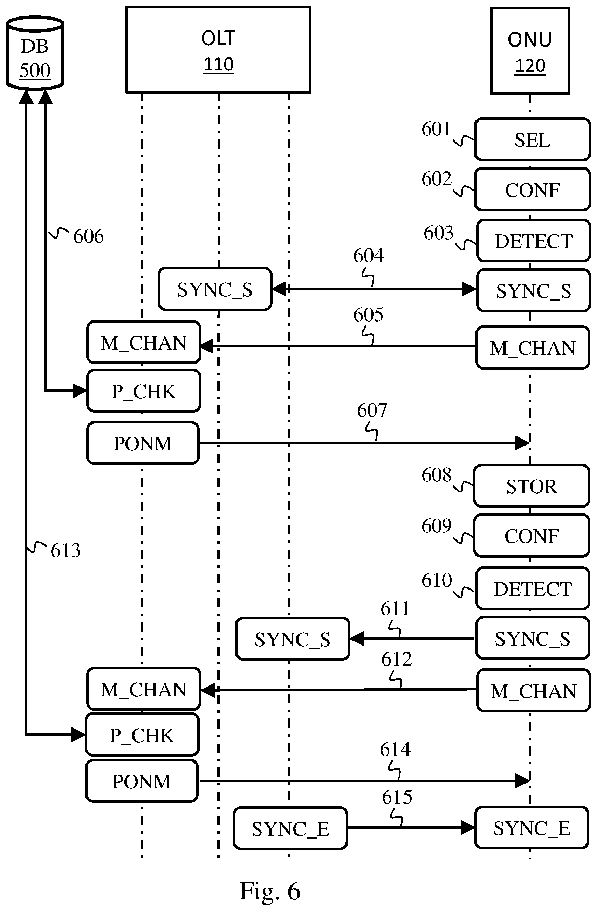

Dans une étape 504, l'équipement ONU 120 et l'équipement OLT 110 interagissent afin de configurer l'équipement ONU 120 pour utiliser le système de transport tel que défini dans le profil utilisateur applicable (opération libellée C_SETUP sur la Fig. 5). Pendant cette opération, l'équipement OLT 110 accède dans une étape 505 à la base de données DB 500 afin de récupérer le profil utilisateur applicable d'après un identifiant d'équipement ONU soumis par l'équipement ONU 120. Cet aspect est détaillé ci-après en relation avec la Fig. 6.

La **Fig. 6** illustre schématiquement des échanges dans le cadre d'une mise en communication d'un équipement ONU 120 avec l'équipement OLT 110 en accord avec le profil utilisateur applicable. Il est considéré au lancement de l'algorithme de la Fig. 6 que la base de données DB 500 est provisionnée avec le profil utilisateur applicable à l'équipement ONU 120, en association avec l'identifiant de l'équipement ONU 120. Au lancement de l'algorithme de la Fig. 6, l'équipement ONU 120 est capable de communiquer dans le réseau optique d'accès 100 par le biais d'au moins deux systèmes de transport distincts (ou au moins trois systèmes de transport distincts dans un mode de réalisation particulier), mais n'a pas connaissance du système de transport déclaré dans le profil utilisateur applicable.

Dans une étape 601, l'équipement ONU 120 démarre et sélectionne (opération libellée SEL sur la Fig. 6) un système de transport par défaut parmi les systèmes de transport supportés par l'équipement ONU 120. Par exemple, une information représentative du système de transport par défaut est stockée dans un paramètre WanMode en mémoire non volatile de l'équipement ONU 120. Par exemple, le paramètre WanMode indique que l'équipement ONU 120 doit utiliser par défaut un système de transport de type G-PON, qui peut toutefois ne pas correspondre au système de transport déclaré dans le profil utilisateur applicable.

Dans une étape 602, l'équipement ONU 120 se configure pour lui permettre de communiquer dans le réseau optique d'accès 100 en utilisant le système de transport par défaut (opération libellée CONF sur la Fig. 6). L'équipement ONU 120 met par exemple en place un pilote dédié, et configure la branche adéquate (voir Fig. 2) pour transmettre et recevoir des signaux via le système de transport par défaut.

Dans une étape 603, l'équipement ONU 120 se met en attente de détecter des signaux optiques de longueur d'onde porteuse (ou de peigne de longueurs d'ondes porteuses) associée au système de transport configuré (opération libellée DETECT sur la Fig. 6).

Dans une variante de réalisation, dans laquelle l'équipement ONU 120 ne dispose pas d'information définissant un système de transport par défaut (e.g., paramètre WanMode mis à une valeur non représentative d'un système de transport par défaut), l'équipement ONU 120 se met directement en mode de détection de signaux optiques. L'équipement ONU 120 peut alors déterminer la longueur d'onde porteuse (ou le peigne de longueurs d'ondes porteuses) des signaux optiques détectés et en déterminer quel système de transport sélectionner pour se configurer.

Dans une étape 604, l' équipement ONU 120 démarre une opération de synchronisation (démarrage libellé SYNC_S sur la Fig. 6) avec l'équipement OLT 110 selon le système de transport configuré. L'équipement ONU 120 soumet alors son identifiant, tel que son numéro de série. Telle que définie par exemple dans la norme ITU-T G.984.1 pour un système de transport de type G-PON, cette opération de synchronisation peut prendre un certain temps. Il est toutefois possible de ne pas attendre la fin de cette opération de synchronisation au niveau de la pile protocolaire du système de transport en question pour commencer à transmettre des messages selon la couche protocolaire commune CP 410, dès lors que l'équipement OLT 110 a reconnu que l'identifiant soumis par l'équipement ONU 120 correspond à un identifiant autorisé.

Typiquement, l'opération de synchronisation démarre par une détection de début de trame par l'équipement ONU 120. Le début de trame est par exemple marqué par un bloc de contrôle physique PCB (« Physical Control Block » en anglais) avec un champ de synchronisation dédié PSYNC. Considérant que l'équipement ONU 120 a détecté un tel début de trame (e.g., champ PSYNC contenant une valeur valide), l'équipement ONU 120 est en mesure de déterminer les instants de débuts de cycles suivants (découpage du temps en cycles de durée prédéfinie). L'équipement ONU 120 se met alors en attente de recevoir des paramètres réseau (e.g., dans un message appelé « Upstream_Overhead ») et se configure en accord avec ces paramètres réseau. Puis, sur requête de l'équipement OLT 110, l'équipement ONU 120 transmet son identifiant (e.g., numéro de série). Dans le cas où l'identifiant soumis par l'équipement ONU 120 correspond à un identifiant autorisé, des échanges de télémétrie (« ranging » en anglais) interviennent pour déterminer un délai d'égalisation (« equilization delay » en anglais) à appliquer par l'équipement ONU 120 dans ses transmissions dans le réseau optique d'accès 100 pour éviter des collisions avec d'autres équipements ONU présents dans le réseau optique d'accès 100 et compenser des différences de longueur entre les lignes optiques d'utilisateurs 141. A cet instant, un canal de commande par le biais de la couche protocolaire commune CP 410 peut être établi, bien que l'opération de synchronisation ne soit pas achevée pour le protocole du système de transport. En effet, pour achever l'opération de synchronisation, il reste au moins à effectuer des échanges afin d'authentifier l'équipement ONU 120, au-delà de l'identification apportée par son identifiant (e.g., numéro de série). Une vérification de clef d'authentification, vue comme un mot de passe et fournie par l'équipement ONU 120 à l'équipement OLT 110, est alors réalisée. Ce type d'opération est bien connu pour être particulièrement chronophage.

Ainsi, dans une étape 605, un canal de commande par le biais de la couche protocolaire commune CP 410 est établi entre l'équipement OLT 110 et l'équipement ONU 120 (opération libellée M_CHAN sur la Fig. 6) sans attendre la fin de l'opération de synchronisation au niveau du système de transport configuré par l'équipement ONU 120. Dans ce canal de commande, l'équipement ONU 120 peut retransmettre à l'équipement OLT 110 son identifiant.

Dans une étape 606, l'équipement OLT 110 vérifie, auprès de la base de données DB 500, quel système de transport est déclaré dans le profil utilisateur associé à l'identifiant soumis par l'équipement ONU 120 (opération libellée P_CHK sur la Fig. 6).

Dans une étape 607, l'équipement OLT 110 génère et transmet par la couche protocolaire commune CP 410 un message qui indique à l'équipement ONU 120 quel système de transport utiliser d'après le profil utilisateur qui lui est associé. Par exemple, conformément aux formats de messages de la couche protocolaire OMCI, le message en question peut inclure un nouvel objet de configuration, de type *Managed Entity,* appelé *PonMode,* et cet objet de configuration contient une information représentative (e.g., un code prédéfini connu de l'équipement ONU 120) du système de transport à utiliser. Dans l'éventualité où la base de données DB 500 ne serait pas encore provisionnée avec une association entre l'identifiant de l'équipement ONU 120 et un profil utilisateur, alors un code d'erreur est transmis à l'équipement ONU 120, qui doit alors réitérer ultérieurement sa tentative de connexion au réseau optique d'accès 100.

Dans une étape 608, à moins d'avoir reçu un code d'erreur, l'équipement ONU 120 vérifie si le message reçu de l'équipement OLT 110 pointe sur le même système de transport que celui utilisé par défaut par l'équipement ONU 120. Si tel est le cas, l'opération de synchronisation se poursuit entre l'équipement OLT 110 et l'équipement ONU 120 pour le système de transport sélectionné par défaut par l'équipement ONU 120. Sinon, tel que considéré dans la Fig. 6, l'équipement ONU 120 stocke en mémoire une information indiquant que le système de transport par défaut est celui indiqué dans le message reçu de l'équipement OLT 110 (opération libellée STOR sur la Fig. 6). Typiquement, le paramètre WanMode est ainsi mis à jour. De cette manière, lors d'un prochain redémarrage de l'équipement ONU 120, le système de transport testé en premier par l'équipement ONU 120 est fort probablement celui qui sera applicable pour accéder aux services.

Dans une étape 609, l'équipement ONU 120 se configure pour lui permettre de communiquer dans le réseau optique d'accès 100 en utilisant le système de transport indiqué par l'équipement OLT 110 (opération libellée CONF sur la Fig. 6). L'équipement ONU 120 met par exemple en place un pilote dédié, et configure la branche adéquate (voir Fig. 2) pour transmettre et recevoir des signaux via le système de transport par défaut.

Dans une étape 610, l'équipement ONU 120 se met en attente de détecter des signaux optiques de longueur d'onde porteuse (ou de peigne de longueurs d'ondes porteuses) associée au système de transport configuré (opération libellée DETECT sur la Fig. 6).

Dans une étape 611, l'équipement ONU 120 démarre une opération de synchronisation (démarrage libellé SYNC_S sur la Fig. 6) avec l'équipement OLT 110 selon le système de transport configuré. L'équipement ONU 120 soumet alors son identifiant, tel que son numéro de série.

Dans une étape 612, un canal de commande est établi entre l'équipement OLT 110 et l'équipement ONU 120 (opération libellée M_CHAN sur la Fig. 6) sans attendre la fin de l'opération de synchronisation au niveau du système de transport configuré par l'équipement ONU 120. Dans ce canal de commande, l'équipement ONU 120 peut retransmettre à l'équipement OLT 110 son identifiant.

Dans une étape 613, l'équipement OLT 110 vérifie, auprès de la base de données DB 500, quel système de transport est déclaré dans le profil utilisateur associé à l'identifiant soumis par l'équipement ONU 120 (opération libellée P_CHK sur la Fig. 6).

Dans une étape 614, l'équipement OLT 110 génère et transmet par la couche protocolaire commune CP 410 un message qui indique à l'équipement ONU 120 quel système de transport utiliser d'après le profil utilisateur qui lui est associé, comme dans l'étape 607.

L'étape 614 répète en substance l'étape 607, du fait que l'équipement OLT 110 agit toujours de la même manière lorsqu'un équipement ONU démarre une synchronisation. Si l'équipement OLT 110 conserve temporairement en mémoire avoir transmis à l'équipement ONU 120 en question un message qui lui indique quel système de transport utiliser, alors l'équipement OLT 110 peut éviter d'avoir à réinterroger la base de données DB 500 et à transmettre à nouveau un message qui indique à l'équipement ONU 120 quel système de transport utiliser.

Dans une étape 615, l'équipement ONU 120 vérifie si le message reçu de l'équipement OLT 110 pointe sur le même système de transport que celui nouvellement utilisé par l'équipement ONU 120, ce qui est le cas ici. Alors, l'opération de synchronisation se poursuit et se termine (fin libellée SYNC_E sur la Fig. 6) entre l'équipement OLT 110 et l'équipement ONU 120 pour le système de transport nouvellement sélectionné par l'équipement ONU 120. Une fois l'opération de synchronisation terminée, l'équipement ONU 120 peut accéder aux services définis dans le profil utilisateur qui lui est associé, en utilisant le système de transport configuré et synchronisé.

Ainsi, grâce au message transmis par la couche protocolaire commune CP 410, l'équipement ONU 120 peut directement basculer sur le système de transport à utiliser (s'il ne l'utilise pas déjà) sans attendre la fin de la synchronisation, ce qui accélère sa mise en communication dans le réseau optique d'accès 100.

De plus, grâce au message transmis par la couche protocolaire commune CP 410, l'équipement ONU 120 peut savoir quel système de transport utiliser pour accéder aux services, même si l'équipement ONU 120 utilise initialement pour ce faire un système de transport qui ne correspond pas au profil utilisateur qui lui est associé. En renseignant via la couche protocolaire commune CP 410 quel système de transport est indiqué dans le profil utilisateur associé à l'équipement ONU 120 en question, l'équipement ONU 120 peut directement basculer sur le système de transport adéquat. Cela évite à l'équipement ONU 120 de tester plus de systèmes de transport que nécessaire parmi tous les systèmes de transport que l'équipement ONU 120 supporte (lorsque l'équipement ONU 120 supporte au moins trois systèmes de transport).

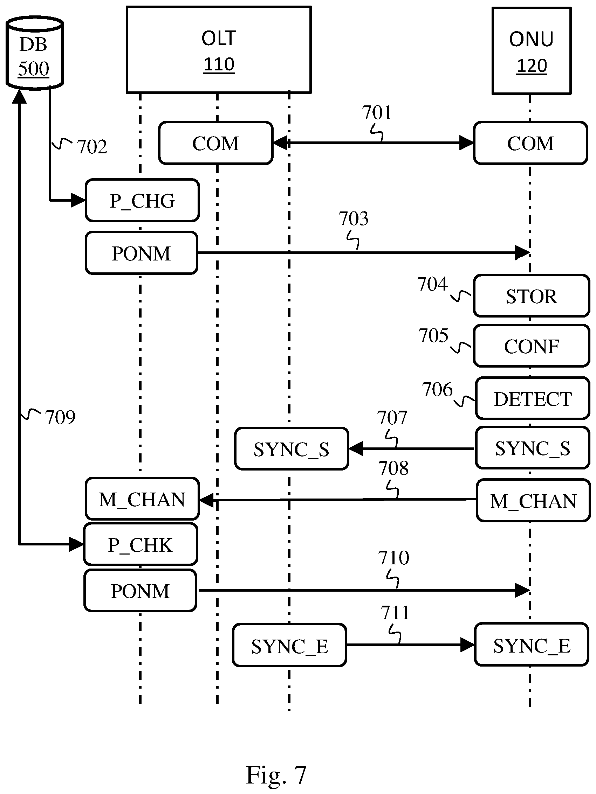

La couche protocolaire commune CP 410 peut aussi être utilisée pour faire basculer l'équipement ONU 120 sur un autre système de transport, par exemple lorsque l'utilisateur a souscrit une nouvelle offre de service ou parce que l'opérateur de service souhaite temporairement faire une opération de maintenance sur le système de transport en cours d'utilisation par l'équipement ONU 120 et qu'il souhaite continuer d'offrir des services via le réseau optique d'accès 100 pendant l'opération de maintenance, le profil utilisateur associé à l'équipement ONU 120 étant alors temporairement modifié en conséquence. Cet aspect est détaillé ci-après en relation avec la Fig. 7.

Il se peut que l'équipement ONU 120 soit face à un équipement OLT ne supportant pas la méthode de configuration automatique décrite ici en relation avec la Fig. 6. Dans ce cas, après le démarrage de la synchronisation, si le message attendu de l'équipement OLT signifiant quel système de transport utiliser n'est pas reçu dans une fenêtre temporelle de durée prédéfinie, l'équipement ONU 120 attend la finalisation, positive ou négative, de la synchronisation. Et dans l'éventualité où la synchronisation n'aboutit pas (le système de transport sélectionné par l'équipement ONU 120 n'est pas le bon), l'équipement ONU 120 sélectionne un autre système de transport parmi ceux supportés par l'équipement ONU 120 et retente la synchronisation avec l'équipement OLT, et ainsi de suite jusqu'à trouver le système de transport qui correspond au profil utilisateur qui lui est associé.

La **Fig. 7** illustre schématiquement des échanges dans le cadre d'une mise en communication d'un équipement ONU 120 avec l'équipement OLT 110, en cas de changement de profil utilisateur.

Dans une étape 701, une communication est établie entre l'équipement ONU 120 et l'équipement OLT 110 (opération libellée COM sur la Fig. 7), et l'équipement ONU 120 accède aux services décrits dans le profil utilisateur qui lui est associé, grâce au système de transport indiqué dans le profil utilisateur. La procédure décrite ci-dessus en relation avec la Fig. 6 a été appliquée pour ce faire.

Dans une étape 702, l'équipement OLT 120 détecte que le profil utilisateur associé à l'équipement ONU 120 a été modifié (opération libellée P_CHG sur la Fig. 7) et que l'équipement ONU 120 doit par conséquent basculer sur un autre système de transport.

Dans une étape 703, l'équipement OLT 110 génère et transmet par la couche protocolaire commune CP 410 un message qui indique à l'équipement ONU 120 quel système de transport utiliser d'après le profil utilisateur qui lui est associé. Par exemple, conformément aux formats de messages de la couche protocolaire OMCI, le message en question peut inclure le nouvel objet de configuration *PonMode,* Et cet objet de configuration contient une information représentative (e.g., un code prédéfini connu de l'équipement ONU 120) du système de transport à utiliser.

Sur réception de ce message, l'équipement ONU 120 lance une tentative de synchronisation sur le nouveau système de transport pointé par l'équipement OLT 110. Alors, dans une étape 704, l'équipement ONU 120 stocke en mémoire une information indiquant que le système de transport par défaut est celui indiqué dans le message reçu de l'équipement OLT 110 (opération libellée STOR sur la Fig. 6). Typiquement, le paramètre WanMode est ainsi mis à jour.

Puis, dans une étape 705, l'équipement ONU 120 se configure pour lui permettre de communiquer dans le réseau optique d'accès 100 en utilisant le système de transport indiqué par l'équipement OLT 110 (opération libellée CONF sur la Fig. 7). L'équipement ONU 120 met par exemple en place un pilote dédié, et configure la branche adéquate (voir Fig. 2) pour transmettre et recevoir des signaux via le système de transport par défaut.

Dans une étape 706, l'équipement ONU 120 se met en attente de détecter des signaux optiques de longueur d'onde porteuse (ou de peigne de longueurs d'ondes porteuses) associée au système de transport configuré (opération libellée DETECT sur la Fig. 7).

Dans une étape 707, l'équipement ONU 120 démarre une opération de synchronisation (libellée SYNC_S sur la Fig. 7) avec l'équipement OLT 110 selon le système de transport configuré. L'équipement ONU 120 soumet alors son identifiant, tel que son numéro de série.

Dans une étape 708, un canal de commande est établi entre l'équipement OLT 110 et l'équipement ONU 120 (opération libellée M_CHAN sur la Fig. 7) sans attendre la fin de l'opération de synchronisation au niveau du système de transport configuré par l'équipement ONU 120. Dans ce canal de commande, l'équipement ONU 120 peut retransmettre à l'équipement OLT 110 son identifiant.

Dans une étape 709, l'équipement OLT 110 vérifie, auprès de la base de données DB 500, quel système de transport est déclaré dans le profil utilisateur associé à l'identifiant soumis par l'équipement ONU 120 (opération libellée P_CHK sur la Fig. 7).

Dans une étape 710, l'équipement OLT 110 génère et transmet par la couche protocolaire commune CP 410 un message qui indique à l'équipement ONU 120 quel système de transport utiliser d'après le profil utilisateur qui lui est associé, comme dans l'étape 703.

L'étape 710 répète en substance l'étape 703, du fait que l'équipement OLT 110 agit toujours de la même manière lorsqu'un équipement ONU démarre une synchronisation. Si l'équipement OLT 110 conserve temporairement en mémoire avoir transmis à l'équipement ONU 120 en question un message qui lui indique quel système de transport utiliser, alors l'équipement OLT 110 peut éviter d'avoir à réinterroger la base de données DB 500 et à transmettre à nouveau un message qui indique à l'équipement ONU 120 quel système de transport utiliser.

Dans une étape 711, l'équipement ONU 120 vérifie si le message reçu de l'équipement OLT 110 pointe sur le même système de transport que celui nouvellement utilisé par l'équipement ONU 120, ce qui est le cas ici. Alors, l'opération de synchronisation se poursuit et se termine (libellée SYNC_E sur la Fig. 7) entre l'équipement OLT 110 et l'équipement ONU 120 pour le système de transport nouvellement sélectionné par l'équipement ONU 120. Une fois l'opération de synchronisation terminée, l'équipement ONU 120 peut accéder aux services définis dans le profil utilisateur modifié qui lui est associé, en utilisant le système de transport configuré et synchronisé.

Ainsi, aucune intervention humaine n'est non plus nécessaire lorsque le profil utilisateur est mis à jour avec un autre système de transport que celui précédemment en vigueur.

A noter que dans le cas où l'équipement ONU 120 ne détecte pas de signaux en s'étant configuré pour le système de transport défini par défaut (référence au paramètre WanMode) pendant une fenêtre temporelle de durée prédéfinie, alors l'équipement ONU 120 teste un autre système de transport parmi ceux supportés par l'équipement ONU 120. En effet, l'opérateur de service peut avoir supprimé le système de transport en question du réseau optique d'accès 100.

A noter aussi que le système de transport défini par défaut (référence au paramètre WanMode) peut être modifié par un autre biais que par des messages en provenance de l'équipement OLT 110, par exemple pour des besoins de test.

A noter aussi qu'en cas de perte de synchronisation, l'équipement ONU 120 réitère la procédure ci-dessus en relation avec la Fig. 6.

## Revendications

1. Procédé de mise en communication d'un équipement utilisateur de type ONU avec un équipement de terminaison de ligne de type OLT dans un réseau optique d'accès proposant divers systèmes de transport, l'équipement utilisateur supportant au moins deux systèmes de transport, chaque système de transport étant un ensemble de communication comportant un protocole dédié, le procédé comportant les étapes suivantes :
- l'équipement utilisateur se configure pour communiquer par le biais d'un premier système de transport parmi les systèmes de transport supportés par l'équipement utilisateur ;
- l'équipement utilisateur démarre une synchronisation avec l'équipement de terminaison de ligne pour le premier système de transport ;
- l'équipement de terminaison de ligne transmet via une couche protocolaire chapeautant tout système de transport du réseau optique d'accès, sans attendre que la synchronisation avec l'équipement utilisateur pour le premier système de transport soit terminée, un premier message indiquant quel système de transport est à utiliser par l'équipement utilisateur ;
- lorsque le système de transport à utiliser par l'équipement utilisateur est le premier système de transport, l'équipement utilisateur poursuit la synchronisation pour le premier système de transport jusqu'à mise en communication dans le réseau optique d'accès ;
- lorsque le système de transport à utiliser par l'équipement utilisateur est un deuxième système de transport différent du premier système de transport, l'équipement utilisateur se configure pour communiquer par le biais du second système de transport et effectue la synchronisation pour le second système de transport jusqu'à mise en communication dans le réseau optique d'accès.

2. Procédé selon la revendication 1, dans lequel l'équipement utilisateur transmet grâce au premier système de transport à l'équipement de terminaison de ligne un identifiant de l'équipement utilisateur et l'équipement de terminaison de ligne obtient, dans une base de données, un profil utilisateur associé à l'identifiant de l'équipement utilisateur, le profil utilisateur incluant l'information de système de transport à utiliser par l'équipement utilisateur.

3. Procédé selon la revendication 2, dans lequel lorsqu' aucun profil utilisateur n'est associé avec l'identifiant de l'équipement utilisateur, le premier message contient un message d'erreur.

4. Procédé selon l'une des revendications 1 à 3, dans lequel la couche protocolaire chapeautant tout système de transport du réseau optique d'accès est OMCI et le premier message inclut un objet de configuration de type « Managed Entity » indiquant le système de transport à utiliser par l'équipement utilisateur.

5. Procédé selon l'une quelconque des revendications 1 à 4, dans lequel lorsqu'un changement de système de transport à utiliser par l'équipement utilisateur survient et qu'en outre l'équipement utilisateur est déjà mis en communication dans le réseau optique d'accès, l'équipement de terminaison de ligne transmet, via la couche protocolaire chapeautant tout système de transport du réseau optique d'accès, un second message indiquant quel système de transport est à utiliser désormais par l'équipement utilisateur, et l'équipement utilisateur se configure pour communiquer par le biais du système de transport à utiliser désormais et effectue la synchronisation pour le système de transport à utiliser désormais jusqu'à mise en communication dans le réseau optique d'accès.

6. Procédé selon l'une quelconque des revendications 1 à 5, dans lequel l'équipement utilisateur obtient une information représentative du premier système de transport à partir d'un paramètre stocké en mémoire non volatile de l'équipement utilisateur, et sur réception de tout message en provenance de l'équipement de terminaison de ligne indiquant le système de transport à utiliser par l'équipement utilisateur, l'équipement utilisateur met à jour ledit paramètre avec une information représentative du système de transport à utiliser par l'équipement utilisateur tel qu'indiqué dans ledit message.

7. Procédé selon l'une quelconque des revendications 1 à 6, dans lequel lorsque l'équipement utilisateur ne détecte pas de signaux, en s'étant configuré pour le premier système de transport, pendant une fenêtre temporelle de durée prédéfinie, l'équipement utilisateur teste alors un autre système de transport parmi ceux supportés par l'équipement utilisateur.

8. Procédé de mise en communication d'un équipement utilisateur de type ONU avec un équipement de terminaison de ligne de type OLT dans un réseau optique d'accès, le procédé étant réalisé par l'équipement utilisateur, l'équipement utilisateur supportant au moins deux systèmes de transport, chaque système de transport étant un ensemble de communication comportant un protocole dédié, le procédé comportant les étapes suivantes :
- configurer l'équipement utilisateur pour communiquer par le biais d'un premier système de transport parmi les systèmes de transport supportés par l'équipement utilisateur ;
- démarrer une synchronisation avec l'équipement de terminaison de ligne pour le premier système de transport ;
- recevoir via une couche protocolaire chapeautant l'ensemble des systèmes de transport supportés par l'équipement utilisateur, sans attendre que la synchronisation avec l'équipement de terminaison de ligne pour le premier système de transport soit terminée, un message indiquant quel système de transport est à utiliser par l'équipement utilisateur ;
- lorsque le système de transport à utiliser par l'équipement utilisateur est le premier système de transport, poursuivre la synchronisation pour le premier système de transport jusqu'à mise en communication dans le réseau optique d'accès ;
- lorsque le système de transport à utiliser par l'équipement utilisateur est un second système de transport différent du premier système de transport, configurer l'équipement utilisateur pour communiquer par le biais du second système de transport et effectuer la synchronisation pour le second système de transport jusqu'à mise en communication dans le réseau optique d'accès.

9. Procédé de mise en communication d'un équipement utilisateur de type ONU avec un équipement de terminaison de ligne de type OLT dans un réseau optique d'accès, le procédé étant réalisé par l'équipement de terminaison de ligne, l'équipement de terminaison de ligne supportant divers systèmes de transport, chaque système de transport étant un ensemble de communication comportant un protocole dédié, le procédé comportant les étapes suivantes :
- démarrer une synchronisation avec l'équipement utilisateur, à l'initiative de ce dernier, pour un premier système de transport ;
- transmettre via une couche protocolaire chapeautant les systèmes de transport supportés par l'équipement de terminaison de ligne, sans attendre que la synchronisation avec l'équipement utilisateur pour le premier système de transport soit terminée, un message indiquant quel système de transport est à utiliser par l'équipement utilisateur ;
- lorsque le système de transport à utiliser par l'équipement utilisateur est différent du premier système de transport, démarrer une synchronisation avec l'équipement utilisateur, à l'initiative de ce dernier, pour ledit système de transport à utiliser par l'équipement utilisateur.

10. Produit programme d'ordinateur comportant des instructions pour implémenter, par un processeur, le procédé selon la revendication 8 ou selon la revendication 9, lorsque ledit programme est exécuté par ledit processeur.

11. Support de stockage d'informations stockant un programme d'ordinateur comprenant des instructions pour implémenter, par un processeur, le procédé selon la revendication 8 ou selon la revendication 9, lorsque ledit programme est lu et exécuté par ledit processeur.

12. Equipement utilisateur de type ONU destiné à être mis en communication avec un équipement de terminaison de ligne de type OLT dans un réseau optique d'accès, l'équipement utilisateur supportant au moins deux systèmes de transport, chaque système de transport étant un ensemble de communication comportant un protocole dédié, l'équipement utilisateur comportant :
- des moyens pour configurer l'équipement utilisateur pour communiquer par le biais d'un premier système de transport parmi les systèmes de transport supportés par l'équipement utilisateur ;
- des moyens pour démarrer une synchronisation avec l'équipement de terminaison de ligne pour le premier système de transport ;
- des moyens pour recevoir via une couche protocolaire chapeautant l'ensemble des systèmes de transport supportés par l'équipement utilisateur, sans attendre que la synchronisation avec l'équipement de terminaison de ligne pour le premier système de transport soit terminée, un message indiquant quel système de transport est à utiliser par l'équipement utilisateur ;
- lorsque le système de transport à utiliser par l'équipement utilisateur est le premier système de transport, des moyens pour poursuivre la synchronisation pour le premier système de transport jusqu'à mise en communication dans le réseau optique d'accès ;
- lorsque le système de transport à utiliser par l'équipement utilisateur est un deuxième système de transport différent du premier système de transport, des moyens pour configurer l'équipement utilisateur pour communiquer par le biais du second système de transport et effectuer la synchronisation pour le second système de transport jusqu'à mise en communication dans le réseau optique d'accès.

13. Equipement de terminaison de ligne de type OLT destiné à être mis en communication avec un équipement utilisateur de type ONU dans un réseau optique d'accès, l'équipement de terminaison de ligne supportant divers systèmes de transport, chaque système de transport étant un ensemble de communication comportant un protocole dédié, l'équipement de terminaison de ligne comportant :
- des moyens pour démarrer une synchronisation avec l'équipement utilisateur, à l'initiative de ce dernier, pour un premier système de transport ;
- des moyens pour transmettre via une couche protocolaire chapeautant les systèmes de transport supportés par l'équipement de terminaison de ligne, sans attendre que la synchronisation avec l'équipement utilisateur pour le premier système de transport soit terminée, un message indiquant quel système de transport est à utiliser par l'équipement utilisateur ;
- lorsque le système de transport à utiliser par l'équipement utilisateur est différent du premier système de transport, des moyens pour démarrer une synchronisation avec l'équipement utilisateur, à l'initiative de ce dernier, pour ledit système de transport à utiliser par l'équipement utilisateur.

14. Réseau optique d'accès comportant un équipement de terminaison de ligne de type OLT selon la revendication 13 et au moins un équipement utilisateur de type ONU selon la revendication 12.

## Patentansprüche

1. Verfahren zur Herstellung einer Verbindung zwischen einer Benutzerausrüstung vom Typ ONU und einem Netzabschlussgerät vom Typ OLT in ein optisches Zugangsnetzwerk mit verschiedenen Übermittlungssystemen. Dabei unterstützt die Benutzerausrüstung mindestens zwei Übermittlungssysteme und jedes Übermittlungssystem ist eine Kommunikationseinheit, die ein dediziertes Protokoll umfasst. Das Verfahren umfasst folgende Schritte:
- die Benutzerausrüstung konfiguriert sich so, dass sie über ein erstes Übermittlungssystem aus den von der Benutzerausrüstung unterstützten Übermittlungssystemen kommuniziert;
- die Benutzerausrüstung startet eine Synchronisation mit dem Netzabschlussgerät für das erste Übermittlungssystem;
- das Netzabschlussgerät übermittelt über eine Protokollschicht, die jedem Übermittlungssystem des optischen Zugangsnetzwerkes übergeordnet ist, eine erste Nachricht, die angibt, welches Übermittlungssystem von der Benutzerausrüstung zu verwenden ist. Dabei wartet es nicht, bis die Synchronisierung mit der Benutzerausrüstung für das erste Übermittlungssystem abgeschlossen ist;
- wenn das von der Benutzerausrüstung zu verwendende Übermittlungssystem das erste Übermittlungssystem ist, setzt die Benutzerausrüstung die Synchronisierung für das erste Übermittlungssystem fort, bis sie über das optische Zugangsnetzwerk kommuniziert;
- wenn das von der Benutzerausrüstung zu verwendende Übermittlungssystem ein zweites Übermittlungssystem ist, das sich von dem ersten Übermittlungssystem unterscheidet, konfiguriert sich die Benutzerausrüstung, um über das zweite Übermittlungssystem zu kommunizieren, und führt die Synchronisierung für das zweite Übermittlungssystem durch, bis sie über das optischen Zugangsnetzwerk kommuniziert.

2. Verfahren nach Anspruch 1, bei dem die Benutzerausrüstung über das erste Übermittlungssystem die Kennung der Benutzerausrüstung an das Netzabschlussgerät überträgt und das Netzabschlussgerät in einer Datenbank ein Benutzerprofil erhält, das mit der Kennung der Benutzerausrüstung verknüpft ist. Dabei enthält das Benutzerprofil die Information über das von der Benutzerausrüstung zu verwendende Übermittlungssystem.

3. Verfahren nach Anspruch 2, bei dem, wenn kein Benutzerprofil mit der Kennung der Benutzerausrüstung verknüpft ist, die erste Nachricht eine Fehlermeldung enthält.

4. Verfahren nach einem der Ansprüche 1 bis 3, bei dem die Protokollschicht, die jedem Übermittlungssystem des optischen Zugangsnetzwerkes übergeordnet ist, OMCI ist und die erste Nachricht ein Konfigurationsobjekt vom Typ "Managed Entity" enthält, das das von der Benutzerausrüstung zu verwendende Übermittlungssystem angibt.

5. Verfahren nach einem der Ansprüche 1 bis 4, bei dem, wenn ein Wechsel des von der Benutzerausrüstung zu verwendenden Übermittlungssystems stattfindet und die Benutzerausrüstung außerdem bereits über das optische Zugangsnetzwerk kommuniziert, das Netzabschlussgerät über die Protokollschicht, die jedem Übermittlungssystem des optischen Zugangsnetzwerkes übergeordnet ist, eine zweite Nachricht übermittelt, die angibt, welches Netzabschlussgerät nun von dem Benutzergerät zu verwenden ist. Zudem ist die Benutzerausrüstung konfiguriert, um über das nun an zu verwendende Übermittlungssystem zu kommunizieren und führt die Synchronisierung für das nun zu verwendende Übermittlungssystem durch, bis es über das optische Zugangsnetzwerk kommuniziert.

6. Verfahren nach einem der Ansprüche 1 bis 5, bei dem die Benutzerausrüstung eine für das erste Übermittlungssystem repräsentative Information aus einem Parameter erhält, der in einem nichtflüchtigen Speicher der Benutzerausrüstung gespeichert ist. Zudem aktualisiert die Benutzerausrüstung den Parameter mit einer Information, die für das von der Benutzerausrüstung zu verwendende Übermittlungssystem repräsentativ ist, wie es in der Nachricht angegeben ist und zwar bei Empfang jeglicher Nachricht vom Netzabschlussgerät, welches das von der Benutzerausrüstung zu verwendende Übermittlungssystem angibt.

7. Verfahren nach einem der Ansprüche 1 bis 6, bei dem, wenn die Benutzerausrüstung während eines vordefinierten Zeitfenster keine Signale erkennt, indem sie sich für das erste Übermittlungssystem konfiguriert hat, die Benutzerausrüstung dann ein anderes Übermittlungssystem unter denen testet, die von der Benutzerausrüstung unterstützt werden.

8. Verfahren zur Herstellung einer Verbindung zwischen einer Benutzerausrüstung vom Typ ONU und einem Netzabschlussgerät vom Typ OLT in einem optischen Zugangsnetzwerk. Dabei wird das Verfahren von der Benutzerausrüstung durchgeführt und die Benutzerausrüstung mindestens unterstützt zwei Übermittlungssysteme. Jedes Übermittlungssystem ist eine Kommunikationseinheit, die ein dediziertes Protokoll umfasst. Das Verfahren umfasst folgende Schritte:
- Konfigurieren der Benutzerausrüstung, um über ein erstes Übermittlungssystem aus den von der Benutzerausrüstung unterstützten Übermittlungssystemen zu kommunizieren;
- Starten einer Synchronisierung mit dem Netzabschlussgerät für das erste Übermittlungssystem;
- Empfang einer Nachricht über eine Protokollschicht, die der Gesamtheit der von der Benutzerausrüstung unterstützten Übermittlungssysteme übergeordnet ist, und die angibt, welches Übermittlungssystem von der Benutzerausrüstung zu verwenden ist. Dabei wartet es nicht, bis die Synchronisierung mit dem Netzabschlussgerät für das erste Übermittlungssystem abgeschlossen ist;
- wenn das von der Benutzerausrüstung zu verwendende Übermittlungssystem das erste Übermittlungssystem ist, die Synchronisierung für das erste Übermittlungssystem fortsetzen, bis eine Verbindung im optischen Zugangsnetzwerk hergestellt ist;
- wenn das von der Benutzerausrüstung zu verwendende Übermittlungssystem ein zweites Übermittlungssystem ist, das sich von dem ersten Übermittlungssystem unterscheidet, die Benutzerausrüstung konfigurieren, um über das zweite Übermittlungssystem zu kommunizieren, und die Synchronisierung für das zweite Übermittlungssystem durchführen, bis eine Verbindung im optischen Zugangsnetzwerk hergestellt ist;

9. Verfahren zur Herstellung einer Verbindung zwischen einer Benutzerausrüstung vom Typ ONU und einem Netzabschlussgerät vom Typ OLT in einem optischen Zugangsnetzwerk. Dabei wird das Verfahren durch die Netzabschlussgeräte durchgeführt. Die Netzabschlussgeräte unterstützen verschiedene Übermittlungssysteme und jedes Übermittlungssystem ist eine Kommunikationseinheit, die ein dediziertes Protokoll umfasst. Das Verfahren umfasst folgende Schritte:
- Starten einer Synchronisation mit der Benutzerausrüstung auf Initiative des Benutzers für ein erstes Übermittlungssystem;
- Übermittlung einer Nachricht über eine Protokollschicht, die denen vom Netzabschlussgerät unterstützten Übermittlungssysteme übergeordnet ist und die angibt, welches Übermittlungssystem von der Benutzerausrüstung zu verwenden ist.
- Dabei wird nicht darauf gewartet, bis die Synchronisierung mit der Benutzerausrüstung für das erste Übermittlungssystem abgeschlossen ist;
- wenn das von der Benutzerausrüstung zu verwendende Übermittlungssystem sich von dem ersten Übermittlungssystem unterscheidet, auf Initiative der Benutzerausrüstung eine Synchronisierung mit der Benutzerausrüstung für das von der Benutzerausrüstung zu verwendende Übermittlungssystem starten.

10. Computerprogrammprodukt, das Anweisungen enthält, um durch einen Prozessor das Verfahren nach Anspruch 8 oder nach Anspruch 9 zu implementieren, wenn das Programm durch den Prozessor ausgeführt wird.

11. Speichermedium für Informationen, das ein Computerprogramm speichert, welches Anweisungen enthält, um durch einen Prozessor das Verfahren nach Anspruch 8 oder nach Anspruch 9 zu implementieren, wenn das Programm durch den Prozessor gelesen und ausgeführt wird.

12. Benutzerausrüstung vom Typ ONU, die dazu bestimmt ist, mit einem Netzabschlussgerät vom Typ OLT in einem optischen Zugangsnetzwerk verbunden zu werden. Dabei unterstützt die Benutzerausrüstung mindestens zwei Übermittlungssysteme und jedes Übermittlungssystem ist eine Kommunikationseinheit, die ein dediziertes Protokoll umfasst. Die Benutzerausrüstung umfasst Folgendes:
- Mittel zum Konfigurieren der Benutzerausrüstung, um über ein erstes Übermittlungssystem aus den von der Benutzerausrüstung unterstützten Übermittlungssystemen zu kommunizieren;
- Mittel zum Starten einer Synchronisierung mit dem Netzabschlussgerät für das erste Übermittlungssystem;
- Mittel zum Empfang einer Nachricht über eine Protokollschicht, die der Gesamtheit der von der Benutzerausrüstung unterstützten Übermittlungssysteme übergeordnet ist, und die angibt, welches Übermittlungssystem von der Benutzerausrüstung zu verwenden ist. Dabei wartet es nicht, bis die Synchronisierung mit dem Netzabschlussgerät für das erste Übermittlungssystem abgeschlossen ist;
- wenn das von der Benutzerausrüstung zu verwendende Übermittlungssystem das erste Übermittlungssystem ist, Mittel, um die Synchronisierung für das erste Übermittlungssystem fortzusetzen, bis eine Verbindung im optischen Zugangsnetzwerk hergestellt ist;
- wenn das von der Benutzerausrüstung zu verwendende Übermittlungssystem ein zweites Übermittlungssystem ist, das sich von dem ersten Übermittlungssystem unterscheidet, Mittel, um die Benutzerausrüstung zu konfigurieren, um über das zweite Übermittlungssystem zu kommunizieren, und die Synchronisierung für das zweite Übermittlungssystem durchzuführen, bis eine Verbindung im optischen Zugangsnetzwerk hergestellt ist;

13. Netzabschlussgerät vom Typ OLT, das dazu bestimmt ist, mit einer Benutzerausrüstung vom Typ ONU in einem optischen Zugangsnetzwerk verbunden zu werden. Dabei unterstützt das Netzabschlussgerät mindestens zwei Übermittlungssysteme und jedes Übermittlungssystem ist eine Kommunikationseinheit, die ein dediziertes Protokoll umfasst. Das Netzabschlussgerät umfasst Folgendes:
- Mittel zum Starten einer Synchronisation mit der Benutzerausrüstung auf Initiative des Benutzers für ein erstes Übermittlungssystem;
- Mittel zur Übermittlung einer Nachricht über eine Protokollschicht, die der vom Netzabschlussgerät unterstützten Übermittlungssysteme übergeordnet ist, und die angibt, welches Übermittlungssystem von der Benutzerausrüstung zu verwenden ist. Dabei wird nicht darauf gewartet, bis die Synchronisierung mit der Benutzerausrüstung für das erste Übermittlungssystem abgeschlossen ist;
- wenn das von der Benutzerausrüstung zu verwendende Übermittlungssystem sich von dem ersten Übermittlungssystem unterscheidet, Mittel, um auf Initiative der Benutzerausrüstung eine Synchronisierung mit der Benutzerausrüstung für das von der Benutzerausrüstung zu verwendende Übermittlungssystem zu starten.

14. Optisches Zugangsnetzwerk mit einem Netzabschlussgerät vom Typ OLT nach Anspruch 13 und mindestens einer Benutzerausrüstung vom Typ ONU nach Anspruch 12.

## Claims

1. Method for putting an item of user equipment of the ONU type in communication with an item of line termination equipment of the OLT type in an optical access network offering various transport systems, the user equipment supporting at least two transport systems, each transport system being a communication set comprising a dedicated protocol, the method comprising the following steps:
- the user equipment configures itself for communicating by means of a first transport system among the transport systems supported by the user equipment;
- the user equipment starts a synchronisation with the line termination equipment for the first transport system;
- the line termination equipment transmits, via a protocol layer fitting on top of any transport system of the optical access network, without waiting for the synchronisation with the user equipment for the first transport system to have ended, a first message indicating which transport system is to be used by the user equipment;
- when the transport system to be used by the user equipment is the first transport system, the user equipment continues the synchronisation for the first transport system until communication is established in the optical access network;
- when the transport system to be used by the user equipment is a second transport system different from the first transport system, the user equipment configures itself for communicating by means of the second transport system and implements the synchronisation for the second transport system until communication is established in the optical access network.

2. Method according to claim 1, wherein the user equipment transmits, by means of the first transport system, to the line termination equipment, an identifier of the user equipment and the line termination equipment obtains, in a database, a user profile associated with the identifier of the user equipment, the user profile including the information on the transport system to be used by the user equipment.

3. Method according to claim 2, wherein, when no user profile is associated with the identifier of the user equipment, the first message contains an error message.

4. Method according to one of claims 1 to 3, wherein the protocol layer fitting on top of any transport system of the optical access network is OMCI and the first message includes a configuration object of the "Managed Entity" type indicating the transport system to be used by the user equipment.

5. Method according to any one of claims 1 to 4, wherein, when a change of transport system to be used by the user equipment occurs and furthermore the user equipment is already put in communication in the optical access network, the line termination equipment transmits, via the protocol layer fitting on top of any transport system of the optical access network, a second message indicating which transport system is now to be used by the user equipment, and the user equipment configures itself for communicating by means of the transport system now to be used and implements the synchronisation for the transport system now to be used until communication is established in the optical access network.

6. Method according to any one of claims 1 to 5, wherein the user equipment obtains information representative of the first transport system from a parameter stored in nonvolatile memory of the user equipment and, on reception of any message coming from the line termination equipment indicating the transport system to be used by the user equipment, the user equipment updates said parameter with information representative of the transport system to be used by the user equipment as indicated in said message.

7. Method according to any one of claims 1 to 6, wherein, when the user equipment does not detect any signals, while having configured itself for the first transport system, during a time window of predefined duration, the user equipment then tests another transport system among those supported by the user equipment.

8. Method for putting an item of user equipment of the ONU type in communication with an item of line termination equipment of the OLT type in an optical access network, the method being implemented by the user equipment, the user equipment supporting at least two transport systems, each transport system being a communication set comprising a dedicated protocol, the method comprising the following steps:
- configuring the user equipment for communicating by means of a first transport system among the transport systems supported by the user equipment;
- starting a synchronisation with the line termination equipment for the first transport system;
- receiving, via a protocol layer fitting on top of all the transport systems supported by the user equipment, without waiting for the synchronisation with the line termination equipment for the first transport system to have ended, a message indicating which transport system is to be used by the user equipment;
- when the transport system to be used by the user equipment is the first transport system, continuing the synchronisation for the first transport system until communication is established in the optical access network;
- when the transport system to be used by the user equipment is a second transport system different from the first transport system, configuring the user equipment for communicating by means of the second transport system and implementing the synchronisation for the second transport system until communication is established in the optical access network.

9. Method for putting an item of user equipment of the ONU type in communication with an item of line termination equipment of the OLT type in an optical access network, the method being implemented by the line termination equipment, the line termination equipment supporting various transport systems, each transport system being a communication set comprising a dedicated protocol, the method comprising the following steps:
- starting a synchronisation with the user equipment, at the initiative of the latter, for a first transport system;
- transmitting, via a protocol layer fitting on top of the transport systems supported by the line termination equipment, without waiting for the synchronisation with the user equipment for the first transport system to have ended, a message indicating which transport system is to be used by the user equipment;
- when the transport system to be used by the user equipment is different from the first transport system, starting a synchronisation with the user equipment, at the initiative of the latter, for said transport system to be used by the user equipment.

10. Computer program product comprising instructions for implementing, by a processor, the method according to claim 8 or according to claim 9, when said program is executed by said processor.

11. Information storage medium storing a computer program comprising instructions for implementing, by a processor, the method according to claim 8 or according to claim 9, when said program is read and executed by said processor.

12. Item of user equipment of the ONU type intended to be put in communication with an item of line termination equipment of the OLT type in an optical access network, the user equipment supporting at least two transport systems, each transport system being a communication set comprising a dedicated protocol, the user equipment comprising:
- means for configuring the user equipment for communicating by means of a first transport system among the transport systems supported by the user equipment;
- means for starting a synchronisation with the line termination equipment for the first transport system;
- means for receiving, via a protocol layer fitting on top of all the transport systems supported by the user equipment, without waiting for the synchronisation with the line termination equipment for the first transport system to have ended, a message indicating which transport system is to be used by the user equipment;
- when the transport system to be used by the user equipment is the first transport system, means for continuing the synchronisation for the first transport system until communication is established in the optical access network;
- when the transport system to be used by the user equipment is a second transport system different from the first transport system, means for configuring the user equipment for communicating by means of the second transport system and implementing the synchronisation for the second transport system until communication is established in the optical access network.

13. Item of line termination equipment of the OLT type intended to be put in communication with an item of user equipment of the ONU type in an optical access network, the line termination equipment supporting various transport systems, each transport system being a communication set comprising a dedicated protocol, the line termination equipment comprising:
- means for starting a synchronisation with the user equipment, at the initiative of the latter, for a first transport system;
- means for transmitting, via a protocol layer fitting on top of the transport systems supported by the line termination equipment, without waiting for the synchronisation with the user equipment for the first transport system to have ended, a message indicating which transport system is to be used by the user equipment;
- when the transport system to be used by the user equipment is different from the first transport system, means for starting a synchronisation with the user equipment, at the initiative of the latter, for said transport system to be used by the user equipment.

14. Optical access network comprising an item of line termination equipment of the OLT type according to claim 13 and at least one item of user equipment of the ONU type according to claim 12.
